# DEMANDE DE BREVET EUROPEEN

(11) **EP 1 108 934 A1**
(43) Date de publication de la demande: **20.06.2001**
(21) Numéro de dépôt: 99870262.5
(22) Date de dépôt: 16.12.1999
(51) Int. Cl.: F16K 17/06

(54) **Actionneur d'une soupape de sécurité**

(71) Demandeur: Techspace Aero S.A., 4041 Herstal (BE)
(72) Inventeur: Damhaut, Luc, 4920 Remouchamps (BE)
(74) Mandataire: Van Malderen, Joelle

(57) **Abrégé**

Actionneur de soupape de sécurité (1) muni d'un premier moyen (3) de maintien de ladite soupape (1) fermée en dessous d'au moins une première valeur prédéterminée de pression, caractérisé en ce que l'actionneur est muni d'au moins un second moyen (10) de maintien de ladite soupape en dessous d'au moins une seconde valeur prédéterminée de pression, les deux moyens (3,10) de maintien agissant indépendamment l'un de l'autre.

## Description

### Objet de l'invention

La présente invention se rapporte à un actionneur pour une soupape de sécurité à plus d'un point d'ouverture.

### Etat de la technique

Il est habituel de proposer toute une série de systèmes de sécurité tels que les soupapes qui ont pour but de s'ouvrir en évacuant le fluide excédentaire lorsqu'un certain seuil de pression est dépassé. Le réglage de ce seuil peut être effectué en couplant la soupape à un actionneur. Celui-ci est défini comme le dispositif de maintien de la soupape de sécurité.

Généralement, ces soupapes sont simplement réalisées sous la forme d'un clapet maintenu sur un siège par l'actionneur qui peut être un ressort ou un vérin pneumatique. La soupape présente alors une résistance à l'ouverture du clapet, ce qui détermine un seuil de pression.

On définit le point d'ouverture de la soupape de sécurité comme étant la valeur de pression pour laquelle la soupape débute son mouvement d'ouverture.

Il est déjà connu, dans l'état de la technique, de proposer un double réglage de la précompression d'un système à ressort, effectué par exemple à l'aide d'un levier mécanique ou d'une vis de réglage.

### Buts de l'invention

La présente invention vise à proposer une nouvelle forme d'actionneur pour soupape de sécurité qui présente plusieurs points de réglage.

La présente invention vise également à proposer une solution alternative à l'état de la technique en la matière, tout en étant compatible avec le dispositif à point de réglage simple.

### Principaux éléments caractéristiques de l'invention

La présente invention se rapporte à un actionneur de soupape de sécurité, l'actionneur étant muni d'un premier moyen de maintien de ladite soupape fermée en dessous d'au moins une première valeur prédéterminée de pression, caractérisé en ce que l'actionneur est muni d'au moins un second moyen de maintien de ladite soupape en dessous d'au moins une seconde valeur prédéterminée de pression, les deux moyens de maintien agissant indépendamment l'un de l'autre.

Dans une forme d'exécution préférée de l'invention, la soupape sera réglée pour deux valeurs prédéterminées de pression, déterminant respectivement un premier et un second point d'ouverture.

De préférence, le premier moyen de maintien est constitué par au moins un ressort associé éventuellement à un levier mécanique et/ou une vis de réglage.

De préférence, le second moyen de maintien est un dispositif qui est soumis à la pression interne d'un fluide se trouvant dans la chambre supérieure d'un cylindre dans lequel coulisse un piston agissant sur l'ouverture de la soupape.

Dans ce cas, le dispositif peut avantageusement être muni d'un circuit on/off permettant de mettre sous pression ou non ledit cylindre. De plus, il est généralement constitué par un circuit comprenant une alimentation à air comprimé, un manodétendeur et un distributeur de commande manuel.

Si la chambre supérieure du cylindre n'est pas alimentée en air comprimé, la soupape selon l'invention se ramène à une soupape selon l'état de la technique, c'est-à-dire avec un seul moyen de maintien de la soupape fermée.

Selon l'invention, la première valeur prédéterminée de pression est inférieure à la seconde valeur prédéterminée de pression.

### Brève description des dessins

La Figure 1 représente un schéma de principe de l'actionneur de la soupape de sécurité selon la présente invention.

La Figure 2 représente une vue en élévation d'un actionneur de soupape de sécurité munie de ses ressorts selon une forme d'exécution de l'invention.

### Description d'une forme d'exécution préférée de l'invention

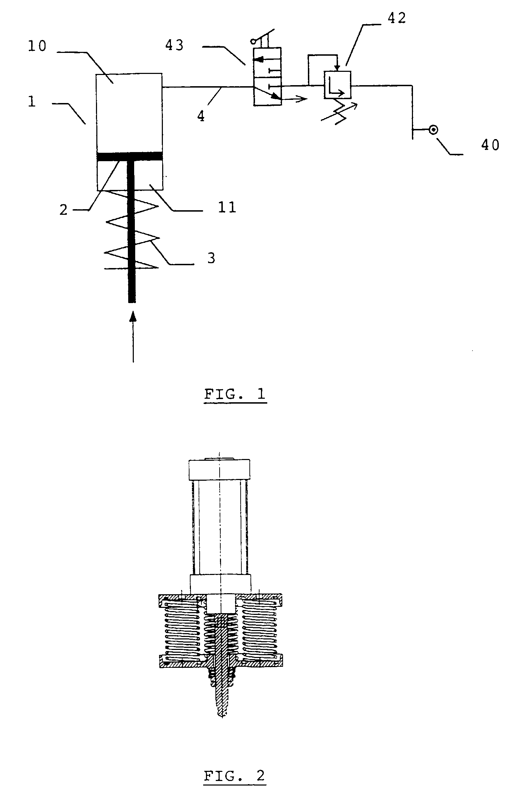

Une forme d'exécution préférée de l'invention est présentée schématiquement à la Figure 1. Cette figure représente essentiellement l'actionneur qui agit sur la tige de commande d'une soupape classique, par exemple une soupape qui présente un clapet solidaire de la tige de commande qui est maintenu sur un siège lorsque la soupape est fermée.

L'actionneur comprend un vérin pneumatique muni d'un cylindre 1, un piston 2 et un ressort 3. Le piston 2 est relié à la soupape classique. Selon la position de tête de piston, on distingue la chambre supérieure 10 et la chambre inférieure 11 du cylindre, cette dernière étant de préférence à la pression atmosphérique.

Le cylindre 1 est relié à un dispositif 4 de commande du mouvement du piston 2. Ce dispositif comprend une alimentation en air comprimé 40, un manodétendeur 42 et un distributeur 43 à commande manuelle 3/2 (3 voies, 2 positions) .

Selon une autre forme d'exécution, le cylindre 1 peut être un vérin pneumatique à piston à double effet. Une pression supérieure à la pression atmosphérique peut alors être appliquée à la chambre inférieure du cylindre 11 grâce à un électro-distributeur (non représenté) placé entre la chambre 11 et l'alimentation en air comprimé 40.

Les différents points suivants conditionnent le fonctionnement correct de l'actionneur de la soupape de sécurité :
- utilisation d'un vérin pneumatique à très faible friction; la chambre supérieure 10 du vérin doit avoir un volume suffisamment grand;
- utilisation d'un manodétendeur 42 à haut débit de mise à l'atmosphère;
- utilisation d'un distributeur 43 à commande manuelle 3/2 avec échappement haut débit;
- bon équilibrage du système de ressorts.

La combinaison du grand volume de la chambre supérieure 10 du vérin pneumatique avec les échappements haut débit du distributeur 43 à commande manuelle 3/2 et du manodétendeur 42 permet, lors de l'ouverture de la soupape, d'éviter une montée en pression dans cette chambre supérieure 10, ce qui perturberait la vitesse d'ouverture.

Au minimum deux points d'ouverture peuvent être obtenus comme suit :
- le premier est donné par le tarage du système de ressorts, la chambre supérieure du vérin n'étant pas alimentée et étant mise à la pression atmosphérique;
- le second est donné par le tarage du système de ressorts auquel on additionne une force de pression dans la chambre supérieure du vérin pneumatique, cette force de pression étant ajustée à l'aide du manodétendeur.

Les deux points d'ouverture sont réglables indépendamment l'un de l'autre.

## Revendications

1. Actionneur de soupape de sécurité muni d'un premier moyen de maintien de ladite soupape fermée en dessous d'au moins une première valeur prédéterminée de pression, caractérisé en ce que l'actionneur est muni d'au moins un second moyen de maintien de ladite soupape en dessous d'au moins une seconde valeur prédéterminée de pression, les deux moyens de maintien agissant indépendamment l'un de l'autre.

2. Actionneur selon la revendication 1, caractérisé en ce que la première valeur prédéterminée de pression détermine un premier point d'ouverture et la seconde valeur prédéterminée de pression détermine un second point d'ouverture.

3. Actionneur selon la revendication 1 ou 2, caractérisé en ce que le premier moyen de maintien est constitué par au moins un ressort (3) associé éventuellement à un levier mécanique et/ou une vis de réglage.

4. Actionneur selon l'une quelconque des revendications précédentes, caractérisé en ce que le second moyen de maintien est un dispositif (4) qui agit sur la pression interne d'un fluide dans la chambre supérieure (10) du cylindre (1) dans lequel coulisse le piston (2) agissant sur l'ouverture de la soupape.

5. Actionneur selon la revendication 4, caractérisée en ce que le dispositif (4) est muni d'un circuit on/off permettant de mettre sous pression ou non la chambre supérieure (10) dudit cylindre.

6. Actionneur selon la revendication 4 ou 5, caractérisé en ce que le dispositif (4) est constitué par un circuit comprenant une alimentation à air comprimé (40), un manodétendeur (42) et un distributeur à commande manuelle 3/2(43).

7. Actionneur selon l'une quelconque des revendications 2 à 6, caractérisé en ce que la première valeur prédéterminée de pression est inférieure à la seconde valeur prédéterminée de pression.
